# EUROPÄISCHE PATENTANMELDUNG

(11) **EP 4 043 366 A1**
(43) Veröffentlichungstag der Anmeldung: **17.08.2022**
(21) Anmeldenummer: 21156404.2
(22) Anmeldetag: 10.02.2021
(51) Int. Cl.: B65G 1/02, B65G 1/10, B23Q 1/25, B65G 65/00

(54) **TRANSFERVORRICHTUNG ZUR ÜBERGABE VON BAUTEILEN AN EINE SICHERHEITSKRITISCHE PRODUKTIONSSEITE**

(71) Anmelder: Inores GmbH, 6312 Steinhausen (CH)
(72) Erfinder: WEDE, Felix, 85435 Erding (DE)
(74) Vertreter: Schwarz & Partner Patentanwälte GmbH

(57) **Zusammenfassung**

Die Erfindung betrifft eine Transfervorrichtung (12) zur Übergabe von Bauteilen (2) von einer Zuführseite an eine sicherheitskritische Produktionsseite (7), an der sich ein Produktionsroboter (9) befindet, wobei die Transfervorrichtung (12) dazu ausgebildet ist, Bauteile (2) aufzunehmen und zur Produktionsseite (7) zu überführen, wobei die Transfervorrichtung (12) zumindest einen verschwenkbaren Bauteilträger (17), bevorzugt zumindest zwei verschwenkbare Bauteilträger (17), umfasst, der zumindest eine Bauteilaufnahme (18), bevorzugt zwei Bauteilaufnahmen (18), zur Aufnahme eines Bauteils (2) umfasst, wobei die Bauteilträger (17) jeweils um parallel zueinander liegende Achsen (A) schwenkbar sind und von einer Beladestellung, in welcher Bauteile (2) von einer der Produktionsseite (7) abgewandten Seite auf die Bauteilaufnahmen (18) legbar sind, in eine Entladestellung verschwenkbar sind, in welcher die Bauteile (2) von der Produktionsseite (7) entnehmbar sind.

## Beschreibung

Die Erfindung betrifft eine Transfervorrichtung zur Übergabe von Bauteilen von einer Zuführseite an eine sicherheitskritische Produktionsseite, an der sich ein Produktionsroboter befindet, wobei die Transfervorrichtung dazu ausgebildet ist, Bauteile aufzunehmen und zur Produktionsseite zu überführen.

Aus dem Stand der Technik, insbesondere aus der Automobilproduktion, ist der Einsatz von Produktionsrobotern bekannt, welche geordnete Bauteile aufgreifen und an einem Produktionstisch oder ähnlichen Vorrichtungen verarbeiten können. Die Produktionsroboter befinden sich auf einer sogenannten Produktionsseite, welche aus Sicherheitsgründen nicht von Personal betreten werden darf. Das zugrundeliegende Problem besteht somit darin, dem Produktionsroboter die Bauteile in einer geordneten Weise zuzuführen, ohne dass Personal die Produktionsseite betreten müsste.

Üblicherweise wird dies dadurch gelöst, dass eine Zuführseite räumlich vom Produktionsbereich getrennt ist, beispielsweise durch einen Schutzzaun, und ein sogenannter Stauförderer oder eine Rutsche oder eine ähnliche Vorrichtung, im Allgemeinen eine Transfervorrichtung, von der Zuführseite durch den Schutzzaun zur Produktionsseite geführt ist. Bei diesem Aufbau der Produktionsanlage kann ein Behälter mit Bauteilen, eine sogenannte Bauteilkiste, an der Zuführseite bereitgestellt werden, in der die Bauteile ungeordnet vorliegen. Ein Produktionsmitarbeiter kann daraufhin Bauteile aus der Bauteilkiste entnehmen und diese in einer geordneten Lage auf speziellen Paletten des Stauförderers oder auf Ablagen anderer Vorrichtungen auflegen. Der Stauförderer oder eine ähnliche Vorrichtung kann daraufhin die geordneten Bauteile durch den Schutzzaun zur Produktionsseite verbringen, wo sie vom Produktionsroboter aufgegriffen und verarbeitet werden können.

Um diesen Prozess zu automatisieren, sehen bekannte Weiterentwicklungen vor, dass der Produktionsmitarbeiter durch eine automatisierte Station, eine sogenannte Bin-Picking-Station, ersetzt wird. Bei Bin-Picking-Stationen handelt es sich um abgeschlossene Einheiten, die alle Sicherheitsvorschriften und Maschinenrichtlinien erfüllen. Diese Bin-Picking-Stationen automatisieren somit exakt die Tätigkeit der Entnahme von Bauteilen aus der Bauteilkiste und des Einlegens von Bauteilen in die speziellen Paletten des Stauförderers oder auf Ablagen anderer Vorrichtungen.

Die nun vorliegenden Systeme umfassend manuelle Ablage oder Bin-Picking-Station, Stauförderer und Produktionsroboter weisen jedoch weiterhin Nachteile auf, da es sich um ein kostenintensives System mit hohen Instandhaltungskosten handelt, das einen großen Platzbedarf aufweist.

Es ist daher die Aufgabe der Erfindung, eine Transfervorrichtung zur Übergabe von Bauteilen von einer Zuführseite an eine sicherheitskritische Produktionsseite mit einem Produktionsroboter zu schaffen, die kostengünstiger ausgebildet werden kann und einen geringeren Platzbedarf aufweist.

Diese Aufgabe wird gelöst durch eine Transfervorrichtung zur Übergabe von Bauteilen von einer Zuführseite an eine sicherheitskritische Produktionsseite, an der sich ein Produktionsroboter befindet, wobei die Transfervorrichtung dazu ausgebildet ist, zumindest einen Bauteil bzw. mehrere Bauteile aufzunehmen und zur Produktionsseite zu überführen, wobei die Transfervorrichtung zumindest einen verschwenkbaren Bauteilträger, bevorzugt zumindest zwei verschwenkbare Bauteilträger, umfasst, der zumindest eine Bauteilaufnahme, bevorzugt zumindest zwei Bauteilaufnahmen, zur Aufnahme eines Bauteils umfasst, wobei der zumindest eine Bauteilträger um eine Achse schwenkbar ist und von einer Beladestellung, in welcher Bauteile von einer der Produktionsseite abgewandten Seite auf die zumindest eine Bauteilaufnahme legbar sind, in eine Entladestellung verschwenkbar ist, in welcher die Bauteile von der Produktionsseite entnehmbar sind.

Wenn zumindest zwei Bauteilträger vorgesehen werden, wird bevorzugt, dass die Bauteilträger jeweils um parallel zueinander liegende Achsen schwenkbar sind und von einer Beladestellung, in welcher Bauteile von einer der Produktionsseite abgewandten Seite auf die Bauteilaufnahmen legbar sind, in eine Entladestellung verschwenkbar sind, in welcher die Bauteile von der Produktionsseite entnehmbar sind.

Dieser sogenannte Produktionspuffer ermöglicht, dass auf den Einsatz von Stauförderern oder ähnlichen Vorrichtungen verzichtet werden kann, wodurch insbesondere die hohen Investitionskosten entfallen und ein Raumgewinn erzielt wird. Der Produktionspuffer kann durch die verschwenkbaren Bauteilträger besonders einfach umgesetzt werden und benötigt keine Förderbänder oder andere Vorrichtungen, sondern verbringt die Bauteile einfach durch eine Schwenk- oder Drehbewegung der Bauteilträger von der Zuführseite an die sicherheitskritische Produktionsseite. Während der Platzbedarf eines Systems umfassend eine Bin-Picking-Station, einen Stauförderer und einen Produktionsroboter ca. 15 m² beträgt, kann der benötigte Platz mit der erfindungsgemäßen Vorrichtung auf insgesamt ca. 2 m² reduziert werden.

In einer besonders bevorzugten Ausführungsform umfasst die Transfervorrichtung zumindest zwei unabhängig voneinander verschwenkbare Bauteilträger. Dadurch kann zumindest einer der Bauteilträger ständig zur Beladung bereitstehen, während Bauteile vom Produktionsroboter von einem anderen Bauteilträger entnommen werden können. Da die Schwenk- oder Drehbewegung zudem äußerst schnell durchgeführt werden kann, kommt es zu keiner Zeitverzögerung von der Fertigstellung eines Beladeprozesses bis zur Bereitstellung an den Produktionsroboter. Selbst im Fall eines einzigen Bauteilträgers treten jedoch bereits die erfindungsgemäßen Vorteile auf, da der Bauteilträger beispielsweise sofort von der Entladestellung in die Beladestellung geschwenkt werden kann, sobald der Produktionsroboter einen Bauteil vom Bauteilträger entnommen hat, und im beladenen Zustand sofort wieder von der Beladestellung in die Entladestellung verschwenkt werden kann, beispielsweise noch bevor der Produktionsroboter einen weiteren Bauteil vom Bauteilträger aufnehmen kann. Im folgenden werden Ausführungsvarianten für eine Transportvorrichtung mit mehreren Bauteilträgern und mehreren Bauteilaufnahmen erläutert, die jedoch auch für Transportvorrichtungen mit nur einem Bauteilträger und/oder nur einer Bauteilaufnahme pro Bauteilträger anwendbar sind.

Es hat sich zudem herausgestellt, dass die erfindungsgemäße Transfervorrichtung, d.h. der Produktionspuffer, nicht nur in Kombination mit einer Bin-Picking-Station vorteilhaft ist, sondern auch in anderen Anwendungsfällen, beispielsweise wenn die Transfervorrichtung manuell beladen wird. Selbst in diesem Fall erzielt der Produktionspuffer im Vergleich zu Stauförderern oder anderen aus dem Stand der Technik bekannten Transfervorrichtungen einen erheblichen Raumgewinn bzw. eine Kostenreduktion.

Besonders bevorzugt sind die Bauteilträger jeweils um horizontale Achsen oder um vertikale Achsen verschwenkbar. Weiters können die Achsen in einer gemeinsamen vertikalen Ebene oder in einer gemeinsamen Ebene liegen, die gegenüber einer vertikalen Ebene geneigt ist. Wenn die Ebene des Produktionspuffers vertikal angeordnet ist, kann der Produktionspuffer beispielsweise einen Teil der Seitenwand der Vorrichtung bilden, beispielsweise in einer Größe von 0,2 m². Die Maße eines solchen Produktionspuffers können beispielsweise 990 mm x 1400 mm x 200 mm betragen. Wenn die Ebene des Produktionspuffers gegenüber der vertikalen Ebene geneigt ist, können die Bauteile besonders einfach vom Produktionsroboter aufgenommen werden, wobei der Platzbedarf eines solchen Produktionspuffers bei ca. 0,6 m² liegt. Mit diesen Ausführungsformen kann eine einfache Steuerung zur Schwenkung der Bauteilträger erzielt werden.

Weiters ist bevorzugt, wenn die Achsen der Bauteilträger jeweils durch die Schwerachsen der Bauteilträger verlaufen. Dies ermöglicht, dass trotz möglicherweise notwendiger starker Querschnitte und damit hohen Gewichten der Bauteilträger ein pneumatisches oder elektromechanisches Schwenken oder Drehen mit geringem Kraftaufwand ermöglicht wird.

Besonders bevorzugt sind die Bauteilträger längliche, bevorzugt L-förmige, Profile, auf welchen die Bauteilaufnahmen linear angeordnet sind. Dadurch können die Bauteilträger besonders einfach hergestellt werden, wobei ein Bauteilträger eine Reihe bzw. Zeile von Bauteilaufnahmen bildet.

In einer weiteren bevorzugten Ausführungsform weisen die Bauteilträger eine erste und eine zweite Trägerwand auf und die Bauteilaufnahmen sind in einem Zwickel zwischen der ersten Trägerwand und der zweiten Trägerwand angeordnet, wobei die erste Trägerwand den Zugang seitens der Produktionsseite auf den Bauteilträger in der Beladestellung verhindert und die zweite Trägerwand den Zugang des Greifroboters auf den Bauteilträger in der Entladestellung verhindert. Dadurch können die Bauteilträger nicht nur eine Aufnahme für die Bauteile darstellen, sondern auch die Absicherung bzw. Außenwand der Vorrichtung oder einen Teil des Schutzzaunes bilden, da die Trägerwände in beiden Betriebsstellungen eine Trennwand zwischen dem Inneren der Vorrichtung bzw. der Zuführseite und dem Produktionsbereich bilden.

Damit der Produktionspuffer auch eine durchgängige Seitenwand der Vorrichtung bilden kann, ist bevorzugt, wenn die Bauteilträger derart positioniert sind, dass ein Spalt von maximal 0,5 cm, bevorzugt maximal 0,3 cm, zwischen den Bauteilträgern vorliegt, unabhängig davon, ob sich diese in der Beladestellung oder der Entladestellung befinden.

Weiters ist besonders vorteilhaft, wenn die Bauteilträger auch einen Schlagschutz bei einer Fehlbedienung des Produktionsroboters bieten. Dies kann beispielsweise erreicht werden, wenn die Bauteilträger aus Metall, bevorzugt Stahl, gefertigt sind und eine Dicke von mindestens 0,5 mm aufweisen. Alternativ könnten die Bauteilträger auch aus Kunststoff oder Keramik gefertigt werden, um den genannten Effekt zu erzielen.

In einer vorteilhaften Ausführungsform weisen die Bauteilträger weitere Bauteilaufnahmen auf, wobei Bauteile in der Entladestellung der Bauteilträger vom Greifroboter auf die weiteren Bauteilaufnahmen legbar sind und Bauteile in der Beladestellung der Bauteilträger von der Produktionsseite von den weiteren Bauteilaufnahmen entnehmbar sind. Dadurch werden die Bauteilaufnahmen am Bauteilträger doppelt ausgeführt, sodass ein auf der Bauteilaufnahme befindlicher Bauteil vom Produktionsroboter entnommen werden kann und unmittelbar dahinter bzw. daneben ein nächster Bauteil vom Greifroboter auf die weitere Bauteilaufnahme legbar ist. Der Bauteilträger weist somit auf derselben Längsrichtung zumindest zwei Bauteilaufnahmen auf, wodurch der Bauteilträger an dieser Stelle gleichzeitig beladen und entladen werden kann.

Die Transfervorrichtung kann weiters eine Steuereinrichtung umfassen, die dazu ausgebildet ist, leere Bauteilträger von der Entladestellung in die Beladestellung zu verschwenken und volle Bauteilträger von der Beladestellung in die Entladestellung zu verschwenken. Dadurch kann das Verfahren einerseits automatisiert und andererseits auch optimiert werden, da es nicht zu einem Verschwenken von nur teilweise beladenen Bauteilträgern kommt.

Das Erkennen, wann ein Bauteilträger vollständig, teilweise oder nicht beladen ist, kann durch eine Auswerteeinheit erfolgen, welche wie aus dem Stand der Technik bekannt Sensorsignale von einer Vielzahl von Sensoren erhalten könnte, die jeweils eine der Bauteilaufnahmen überwachen. Dieses Verfahren ist jedoch aufgrund der hohen Anzahl an benötigten Sensoren, der Vielzahl an erforderlichen Steuereingängen an der Auswerteeinheit und der komplizierten Auswertung nur mit einem großen Kostenaufwand umsetzbar.

In einer besonders bevorzugten Ausführungsform der Erfindung umfasst die erfindungsgemäße Lösung daher eine Auswerteeinheit, eine mit der Auswerteeinheit verbundene Kamera und einen Leuchtpunkt unter jeder der Bauteilaufnahmen aller Bauteilträger, wobei ein jeweiliger Leuchtpunkt von der Kamera erkennbar ist, wenn die jeweilige Bauteilaufnahme unbelegt ist und von der Kamera unerkennbar ist, wenn sich ein Bauteil auf der jeweiligen Bauteilaufnahme befindet, wobei die Auswerteeinheit dazu ausgebildet ist, eine Bauteilaufnahme als belegt oder verdeckt zu erkennen, wenn ein jeweiliger Leuchtpunkt im von der Kamera aufgenommenen Bild ersichtlich ist oder nicht. Diese Lösung hat den Vorteil, dass die Auswerteeinheit nur einen Steuereingang aufweisen muss, um das Bild der Kamera zu erhalten. Die Auswertung des von der Kamera aufgenommenen Bildes, ob Lichtpunkte im Bild ersichtlich sind oder nicht, kann vergleichsweise einfach umgesetzt werden.

In der letztgenannten Ausführungsform können alle Leuchtpunkte eines Bauteilträgers bevorzugt durch eine einzige Lichtquelle, bevorzugt eine LED-Leiste, beleuchtet und jeweils durch Öffnungen im Bereich der Bauteilaufnahmen ausgebildet werden, wobei jeder Bauteilträger weiters bevorzugt eine weitere Öffnung umfasst, durch welche die Lichtquelle ersichtlich ist, selbst wenn alle Bauteilaufnahmen von Bauteilen belegt sind. Dies ermöglicht eine einfache Funktionsüberprüfung der Lichtquelle, auch ohne ein Bauteil vom Bauteilträger entnehmen zu müssen.

In einem weiteren Aspekt schafft die Erfindung eine besonders platzsparende Bin-Picking-Station, d.h. eine Vorrichtung umfassend eine Transfervorrichtung nach einer der oben beschriebenen Ausführungsformen und einen Greifroboter, wobei der Greifroboter dazu ausgebildet ist, einen Bauteil aus einem Behälter aufzunehmen und den aus dem Behälter aufgenommenen Bauteil auf die Transfervorrichtung zu legen.

Um die Vorrichtung abgeschlossen auszubilden, kann diese ein Gehäuse umfassen, wobei der Greifroboter vom Gehäuse umschlossen ist und die Bauteilträger eine Seitenwand der Vorrichtung bilden, wobei der Behälter über eine Einschuböffnung seitens der Zuführseite in die Vorrichtung einbringbar ist. Dadurch wird die Vorrichtung besonders kompakt und sicher ausgebildet und kann insbesondere als modulare Einheit vertrieben werden, die keinen Anschluss an einen Stauförderer oder ähnliches benötigt.

Insgesamt kann somit ein System umfassend eine Vorrichtung und einen auf der Produktionsseite befindlichen Produktionsroboter geschaffen werden, welcher dazu ausgebildet ist, Bauteile von Bauteilträgern aufzunehmen, welche sich in der Entladestellung befinden.

Vorteilhafte und nicht einschränkende Ausführungsformen der Erfindung werden nachfolgend anhand der Zeichnungen näher erläutert.
Figur 1 zeigt ein System mit einem manuellen Arbeitsplatz, einem Stauförderer und einem Produktionsroboter gemäß dem Stand der Technik.
Figur 2 zeigt eine erfindungsgemäße Vorrichtung in einer ersten Perspektivansicht.
Figur 3 zeigt die Vorrichtung von Figur 2 in einer zweiten Perspektivansicht.
Figur 4a und 4b zeigen eine erste Ausführungsform eines Produktionspuffers der erfindungsgemäßen Vorrichtung aus zwei unterschiedlichen Richtungen.
Figur 5 zeigt eine zweite Ausführungsform eines Produktionspuffers der erfindungsgemäßen Vorrichtung.
Figur 6 zeigt eine dritte Ausführungsform eines Produktionspuffers der erfindungsgemäßen Vorrichtung.
Figur 7 zeigt ein Detail des Produktionspuffers der erfindungsgemäßen Vorrichtung.

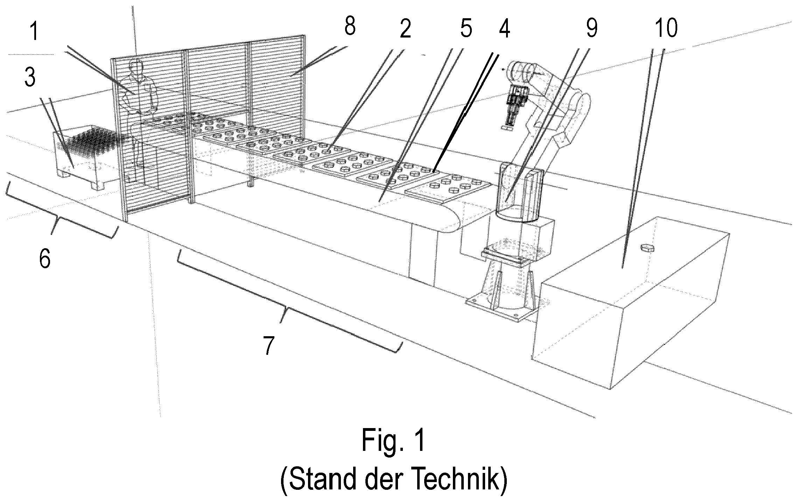

Figur 1 zeigt ein aus dem Stand der Technik bekanntes System, bei dem ein Produktionsmitarbeiter 1 Bauteile 2 aus einem Behälter 3 entnimmt und in einer geordneten Lage auf eine spezielle Palette 4 eines Stauförderers 5 auflegt. Die Bauteile 2 liegen im Behälter 3 ungeordnet vor und müssen daher vom Produktionsmitarbeiter 1 manuell in eine richtige Lage gebracht werden, bevor diese auf die Palette 4 des Stauförderers 5 aufgelegt werden.

Der Stauförderer 5 bringt die nun geordneten Bauteile 2 auf der Palette 4 von der Zuführseite 6, an welcher der Produktionsmitarbeiter 1 arbeitet, zur sicherheitskritischen Produktionsseite 7, die von Personal nicht betreten werden darf. Die Zuführseite 6 ist von der Produktionsseite 7 durch einen Schutzzaun 8 getrennt. Auf der Produktionsseite 7 befindet sich ein Produktionsroboter 9, welcher die auf der Palette 4 geordnet vorliegenden Bauteile 2 aufgreift und auf einem Produktionstisch 10 verarbeitet. Dieses System ist insbesondere in der Automobilindustrie verbreitet.

Es ist bekannt, den Produktionsmitarbeiter 1 durch eine sogenannte Bin-Picking-Station zu ersetzen, welche mittels eines Greifroboters in den Behälter 3 greift, um einen Bauteil 2 aufzugreifen, gegebenenfalls einer Qualitätskontrolle zu unterziehen, in die richtige Lage zu bringen und auf die Palette 4 des Stauförderers 5 aufzulegen. Die Mechanik und Steuerung der im folgenden beschriebenen Vorrichtung, insbesondere die allgemeinen Techniken zur Aufnahme von ungeordneten Bauteilen 2 aus dem Behälter 3 und dem Verbringen der Bauteile 2 in eine vorbestimmte Position, sind aus dem Stand der Technik an sich bekannt. Das im folgenden beschriebene System ist jedoch insbesondere im Hinblick auf die Übergabe der Bauteile 2 zum Produktionsbereich 6 weiterentwickelt.

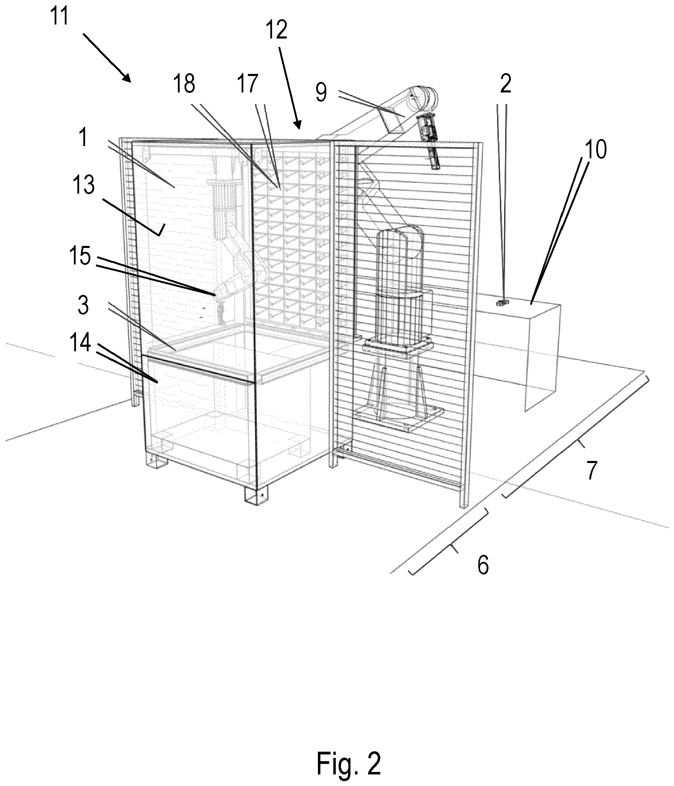

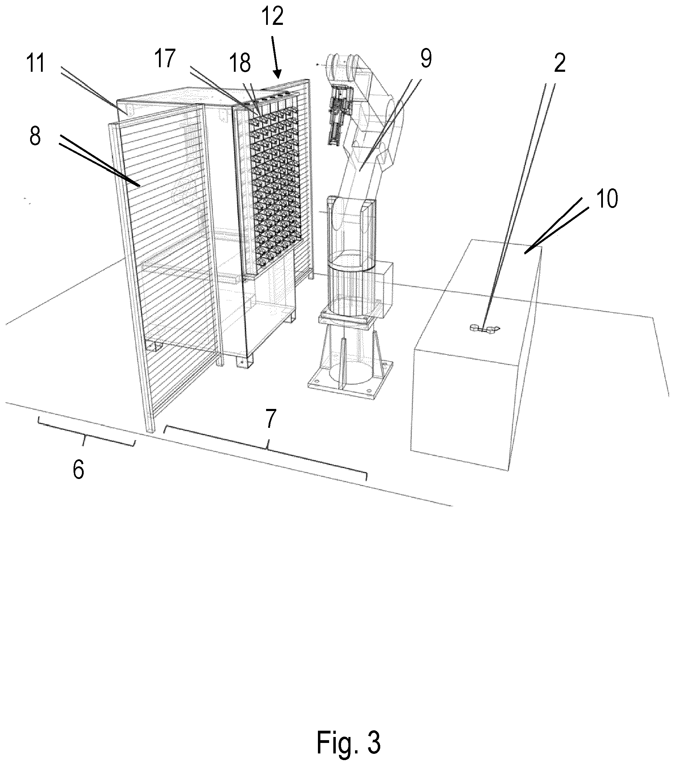

Erfindungsgemäß wird gemäß den Figuren 2 und 3 eine Vorrichtung 11 vorgesehen, d.h. eine Bin-Picking-Station, welche eine als Produktionspuffer ausgebildete Transfervorrichtung 12 aufweist, wodurch auf traditionelle Stauförderer 5 wie in Figur 1 gezeigt verzichtet werden kann. Im Folgenden wird die Vorrichtung 11 im Detail beschrieben, wobei insbesondere die Bauteile 2, der Behälter 3, die Zuführseite 6, die Produktionsseite 7, der Schutzzaun 8, der Produktionsroboter 9, und der Produktionstisch 10 gegenüber der Ausführungsform von Figur 1 unverändert deshalb mit gleichen Bezugszeichen versehen sind.

Die Vorrichtung 11 umfasst ein Gehäuse 13 mit einer Öffnung 14, in welche der Behälter 3 mit den Bauteilen 2 von der begehbaren Zuführseite 6 her manuell oder automatisch einschiebbar ist. Innerhalb des Gehäuses 13 ist ein Greifroboter 15 mit Greifarm vorgesehen, welcher dazu ausgebildet ist, Bauteile 2 aus dem in die Vorrichtung 11 geschobenen Behälter 2 zu entnehmen, gegebenenfalls einer Qualitätskontrolle zu unterziehen, beispielsweise mittels einer Kamera und einer Bildauswerteeinheit, und in einer geordneten Lage auf die Transfervorrichtung 12 zu verbringen.

Analog zum Stauförderer 5 von Figur 1 ist die als Produktionspuffer ausgebildete Transfervorrichtung 12 im Allgemeinen dazu ausgebildet, eine Vielzahl von Bauteilen 2 aufzunehmen und zur Produktionsseite 7 zu überführen. Dort kann der Produktionsroboter 9 die geordneten Bauteile 2 aufnehmen und am Produktionstisch 10 verarbeiten. Im Gegensatz zur Ausführungsform von Figur 1 ist die Transfervorrichtung 12 jedoch nicht als Förderband ausgebildet, sondern umfasst einen oder mehrere verschwenkbare Bauteilträger 17, die jeweils zumindest eine Bauteilaufnahme 18 oder zumindest zwei Bauteilaufnahmen 18 zur Aufnahme eines Bauteils 2 aufweisen. Der Begriff "Verschwenken" umfasst hierin auch den Begriff "Verdrehen" .

Die Bauteilaufnahmen 18 können beispielsweise einen oder mehrere Zentrierstifte und/oder Einweiser für das Bauteil 2 umfassen, um die korrekte Positionierung der Bauteile 2 auf dem Bauteilträger 17 zu gewährleisten. Die Form der Bauteilaufnahme 18 und der gegenseitige Abstand zweier Bauteilaufnahmen 18 auf einem Bauteilträger 17 ist in der Regel von der Form und den Abmessungen des aufzulegenden Bauteils 2 abhängig. Üblicherweise befinden sich zwei bis dreißig, bevorzugt vier bis fünfzehn, Bauteilaufnahmen 18 auf einem Bauteilträger 17. Auch die Anzahl der Bauteilträger 17 kann im Wesentlichen beliebig gewählt werden, bevorzugt zwischen zwei und fünfzehn, besonders bevorzugt zwischen vier und zehn. Besonders bevorzugt kann die Anzahl der Bauteilaufnahmen 18 und die Anzahl der Bauteilträger 17 derart gewählt werden, dass bis zu hundert Bauteile 2 gleichzeitig auf der Produktionsseite 7 zugänglich sein können.

Wie im Folgenden ausgeführt ist, können die Bauteilträger 17 jeweils ohne Translationsbewegung um eine Achse A verschwenkt werden und von einer Beladestellung, in welcher Bauteile 2 vom Greifroboter 15 auf die Bauteilaufnahmen 18 legbar sind, in eine Entladestellung verschwenkt werden, in welcher die Bauteile 2 von der Produktionsseite 7 entnehmbar sind. Durch die Verschwenkbarkeit der Bauteilträger 17 entfällt der Bedarf einer linearen Transfervorrichtung. In der Regel kann der Greifroboter 15 keine Bauteile 2 auf die Bauteilaufnahmen 18 legen, wenn sich der Bauteilträger 17 in der Entladestellung befindet, und der Produktionsroboter 9 kann keine Bauteile 2 von den Bauteilaufnahmen 18 entnehmen, wenn sich der Bauteilträger in der Beladestellung befindet. Die Bauteilaufnahmen 18 sind derart ausgebildet, dass sich ein darauf befindliches Bauteil 2 bezüglich des Bauteilträger 17 beim Verschwenken nicht verrutscht.

Die Bauteilträger 17 sind unabhängig voneinander um die Achsen A verschwenkbar, wofür eine eigene Steuereinheit vorgesehen werden kann. Das Verschwenken der Bauteilträger 17 kann bevorzugt pneumatisch oder elektromechanisch erfolgen. Die Wellenstärke eines Drehlagers kann beispielsweise 20 mm betragen.

Üblicherweise wird ein leerer Bauteilträger 17 in die Beladestellung geschwenkt und danach vom Greifroboter 15 befüllt. Sobald der Bauteilträger 17 voll ist, wird dieser in die Entladestellung verschwenkt, wo die Bauteile 2 vom Produktionsroboter 9 entnommen werden können. Da die Bauteilträger 17 unabhängig voneinander verschwenkbar sind, kann sich jeweils zumindest ein Bauteilträger 17 in der Entladestellung befinden und ein Bauteilträger 17 in der Beladestellung, wodurch in der Regel sichergestellt werden kann, dass dem Produktionsroboter 9 zu jedem Zeitpunkt Bauteile 2 zur Verfügung gestellt werden können.

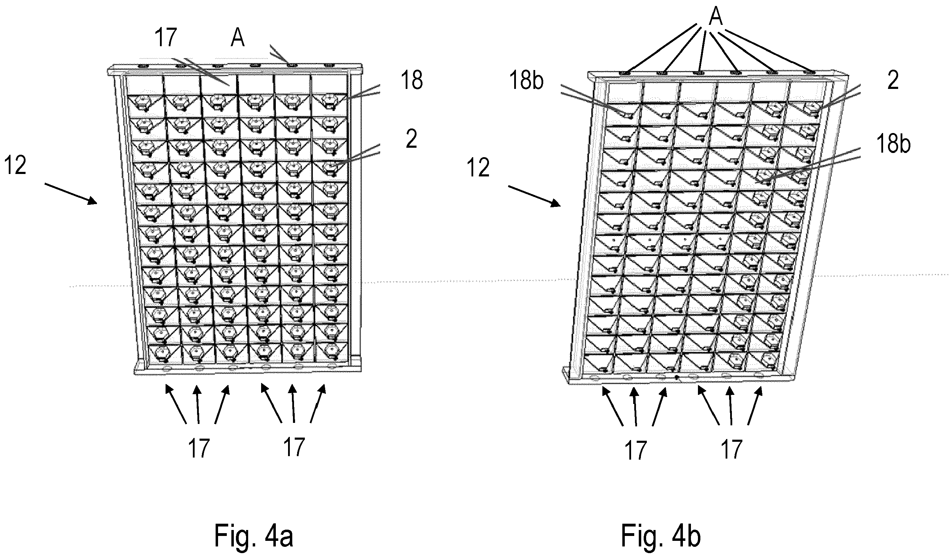

Mit Verweis auf die Figuren 4a und 4b wird nun eine erste bevorzugte Ausführungsform der als Produktionspuffer ausgebildeten Transfervorrichtung 12 erläutert. Gemäß Figur 4a weist die Transfervorrichtung 12 sechs Bauteilträger 17 auf, die jeweils dreizehn Bauteilaufnahmen 18 aufweisen und um vertikale Achsen A verschwenkbar sind. Die sind in einer gemeinsamen vertikalen Ebene angeordnet, sodass der Produktionspuffer beispielsweise als Seitenwand der Vorrichtung 11 bzw. des Gehäuses 13 ausgebildet werden kann, wie auch in den Figuren 2 und 3 dargestellt ist.

Figur 4a zeigt den Produktionspuffer von der Produktionsseite 7. Alle Bauteilaufnahmen 18 sind befüllt und die Bauteilträger 17 befinden sich alle in der Entladestellung, d.h. die Bauteile 2 sind auf der Produktionsseite zugänglich.

Figur 4b zeigt den Produktionspuffer von Figur 4a von der Rückseite, d.h. vom Inneren der Vorrichtung 11. In dieser besonderen Ausführungsform weisen die Bauteilträger 17 auf der Rückseite, d.h. auf der den Bauteilaufnahmen 18 abgewandten Seite, weitere Bauteilaufnahmen 18b auf, die vom Greifroboter 15 befüllt werden können, während Bauteile 2 vom Produktionsroboter 9 von den Bauteilaufnahmen 18 aufgenommen werden können.

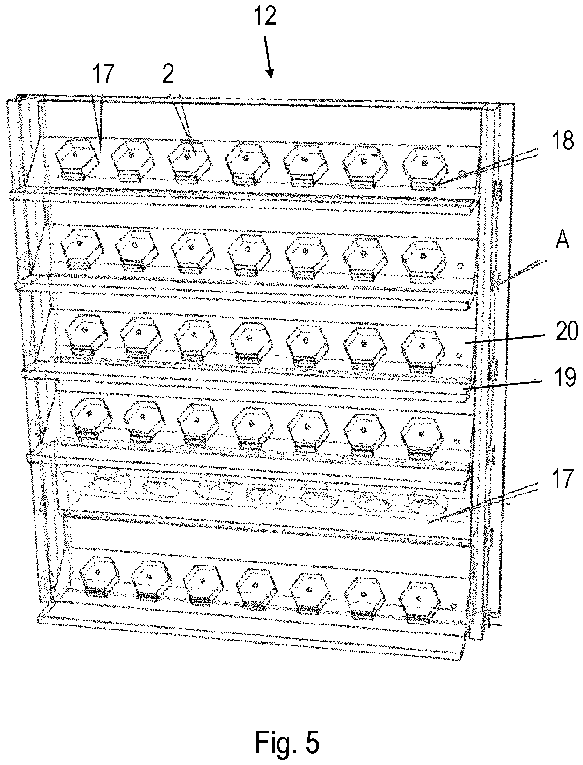

Figur 5 zeigt eine Ausführungsform, die alternativ zu den Ausführungsformen der Figuren 4a und 4b ist. Gemäß Figur 5 werden sechs Bauteilträger 17 eingesetzt, die jeweils um eine horizontale Achse A verschwenkbar sind. Die Bauteilträger 17 weisen jeweils sieben Bauteilaufnahmen 18 auf. Die Achsen A befinden sich abermals in einer gemeinsamen vertikalen Ebene, sodass der Produktionspuffer als Seitenwand der Vorrichtung 11 bzw. des Gehäuses 13 eingesetzt werden könnte. Wie dargestellt befinden sich fünf von sechs Bauteilträgern 17 in einer Entladestellung und einer der Bauteilträger 17 befindet sich in der Beladestellung.

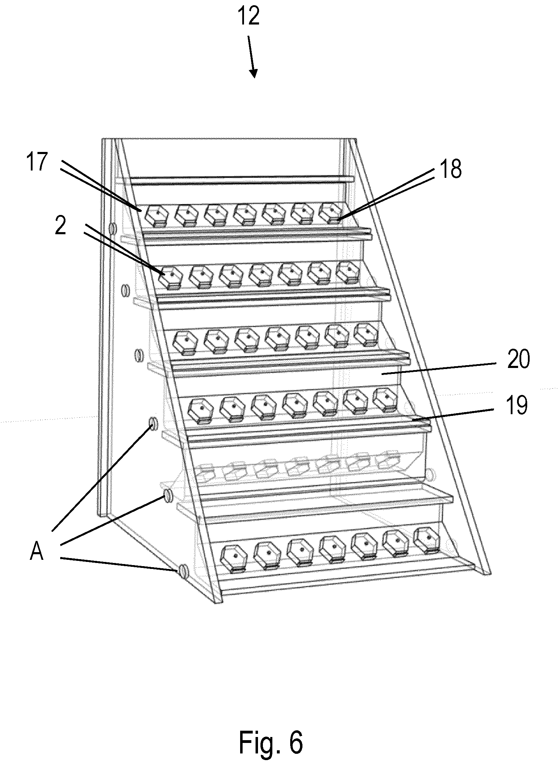

Figur 6 zeigt eine weitere Ausführungsform, bei der die Bauteilträger jeweils um eine horizontale Achse A verschwenkbar sind. Im Gegensatz zur Ausführungsform der Figur 5 liegen die Achsen A jedoch nicht in einer gemeinsamen vertikalen Ebene, sondern in einer Ebene, die gegenüber einer vertikalen Ebene geneigt ist. Dies kann insbesondere vorgesehen werden, um die Zugänglichkeit für den Produktionsroboter 9 zu verbessern.

Aus den Figuren 5 und 6 ist ersichtlich, dass die Bauteilträger 17 in dieser Ausführungsform längliche, L-förmige Profile sind, auf welchen die Bauteilaufnahmen 18 linear, d.h. entlang einer Linie und nicht in einem Array, angeordnet sind. Wie dargestellt können die Bauteilträger 17 überdies eine erste Trägerwand 19 und eine zweite Trägerwand 20 aufweisen, wobei die Bauteilaufnahmen 18 in einem Zwickel zwischen den Trägerwänden 19, 20 angeordnet sind. Die erste Trägerwand 19 soll dabei den Zugang seitens der Produktionsseite auf den Bauteilträger 17 in der Beladestellung verhindern und die zweite Trägerwand 20 soll den Zugang des Greifroboters 15 auf den Bauteilträger 18 in der Entladestellung verhindern. Unter Verweis auf Figur 6 ist beispielsweise ersichtlich, dass sich der unterste Bauteilträger 17 in der Entladestellung befindet und die zweite Trägerwand 20 den Zugang auf den Bauteilträger 17 durch den Greifroboter 15 verhindert. Der zweite Bauteilträger 17 von unten befindet sich hingegen in einer Beladestellung, sodass die erste Trägerwand 19 den Zugang auf den Bauteilträger 17 durch den Produktionsroboter 9 verhindert.

In der Ausführungsform der Figuren 5 und 6 stehen die Trägerwände in einem Winkel 90° zueinander. Hierbei werden die Bauteilträger jeweils in einem Winkel von 90° im Uhrzeigersinn verschwenkt, um die Bauteilträger 17 von der Beladestellung in die Entladestellung zu verbringen, und in einem Winkel von 90° gegen den Uhrzeigersinn verschwenkt, um die Bauteilträger 17 von der Entladestellung in die Beladestellung zu verbringen. Es kann vorgesehen werden, beispielsweise durch mechanische Sperren, dass der Bauteilträger 17 nur in einem vorbestimmten Winkelbereich verschwenkbar ist und/oder nur in einer ersten Schwenkrichtung von der Beladestellung in die Entladestellung und nur in einer zweiten Schwenkrichtung von der Entladestellung in die Beladestellung verbracht werden kann, wobei die erste Schwenkrichtung bevorzugt entgegengesetzt zur zweiten Schwenkrichtung verläuft.

Zurückkommend auf die Figuren 4a und 4b ist ersichtlich, dass der vorbestimmte Winkelbereich zum Verschwenken beispielsweise auch 180° betragen und die Schwenkrichtung beliebig gewählt werden kann. In diesem Fall ist der Bauteilträger 17 kein L-förmiges Profil, sondern eine Platte, d.h. eine einzige Trägerwand, die in der einfachsten Ausführungsform nur auf einer Seite mit Bauteilaufnahmen 18 versehen ist. Die Seite der Platte mit den Bauteilaufnahmen 18 kann somit durch eine Drehung von 180° von der Entladestellung in die Beladestellung, und umgekehrt, verschwenkt werden, wobei die Schwenkrichtung beliebig ist. Wie oben in Bezug auf Figur 4b beschrieben wurde, können die Bauteilträger 17 weitere Bauteilaufnahmen 18b aufweisen, die beispielsweise auf der Rückseite der Platte angeordnet sind. Dadurch können Bauteile 2 in der Entladestellung des Bauteilträgers 17 vom Greifroboter 15 auf die weiteren Bauteilaufnahmen 18b gelegt werden und Bauteile 2 in der Beladestellung der Bauteilträger 17 von der Produktionsseite 7 von den weiteren Bauteilaufnahmen 18b entnommen werden. Dieses Prinzip kann erweitert werden, wenn der Bauteilträger 17 beispielsweise drei, vier oder mehr Trägerwände aufweist, wobei Bauteilaufnahmen 18 jeweils in den Zwickeln der Trägerwände angeordnet sind, sodass bei einer Drehung des Bauteilträgers 17 um 360° auch drei, vier oder mehr Bauteile 2 in derselben Längsposition des Bauteilträgers 17 bereitgestellt werden können.

Die Bauteilträger 17 werden bevorzugt derart geschaffen, dass ein Durchschlagen eines Armes des Produktionsroboters 9 bei einer Fehlfunktion verhindert wird. Zu diesem Zweck können die Bauteilträger aus Metall, bevorzugt Stahl, gefertigt sein und eine Dicke von mindestens 0,5 mm aufweisen. Auch alternative Materialien wie Kunststoff oder sogar Keramik könnten für die Bauteilträger eingesetzt werden, beispielsweise um diese besonders leichtgewichtig und damit leicht verschwenkbar auszubilden.

Als weitere Sicherheitsmaßnahme kann vorgesehen werden, dass die Bauteilträger 17 derart positioniert sind, dass ein Spalt von maximal 0,5 cm, bevorzugt maximal 0,3 cm, zwischen den Bauteilträgern 17 vorliegt, unabhängig davon, ob sich diese in der Beladestellung oder der Entladestellung befinden. Unter Verweis auf die Figuren 4a - 6 ist ersichtlich, dass der Spalt in der Regel so gering gewählt wird, dass ein Hindurchgreifen zwischen den Bauteilträgern 17 ausgeschlossen ist.

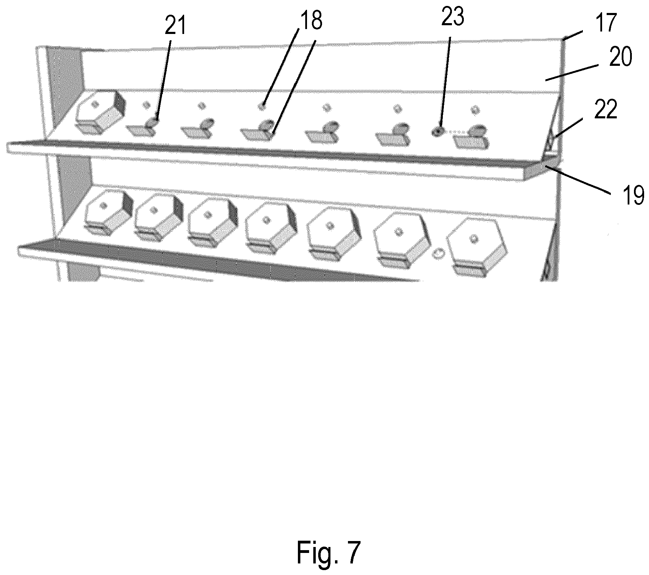

Figur 7 zeigt eine besonders vorteilhafte Möglichkeit, mittels welcher die Vorrichtung 11 feststellen kann, ob sich ein Bauteil 2 auf einer Bauteilaufnahme 18 befindet. Wie auf dem oberen, großteils unbefüllten Bauteilträger 17 zu sehen ist, befindet sich ein Leuchtpunkt 21 unter jeder der Bauteilaufnahmen 18, der von einer nicht weiter dargestellten Kamera ersichtlich ist, wenn sich kein Bauteil 2 auf der jeweiligen Bauteilaufnahme 18 befindet. Wird jedoch ein Bauteil 2 auf eine Bauteilaufnahme 18 gelegt, so wird der zugehörige Leuchtpunkt 21 verdeckt. Die genannte Kamera bzw. eine an diese angeschlossene Auswerteeinheit kann durch das Erkennen eines Leuchtpunktes 21 feststellen, ob die zugehörige Bauteilaufnahme 18 belegt ist oder nicht.

In der Ausführungsform von Figur 7 werden alle Leuchtpunkte 21 durch eine gemeinsame Lichtquelle, hier eine LED-Leiste 22, beleuchtet, wobei für jeden Leuchtpunkt 21 eine Öffnung, z.B. eine Bohrung, im Bauteilträger 17 vorgesehen ist, durch welche die LED-Leiste 22 ersichtlich ist. Alle Leuchtpunkte 21 des Bauteilträgers 17 werden somit von einer einzigen Lichtquelle beleuchtet.

In der vorgenannten Ausführungsform kann überdies eine weitere Öffnung 23 im Bauteilträger 17 vorgesehen werden, durch welche die Lichtquelle ersichtlich ist, um ein Kontrolllicht zu erzeugen. Die weitere Öffnung 23 wird derart am Bauteilträger 17 vorgesehen, dass das Kontrolllicht selbst dann ersichtlich ist, wenn alle Bauteilaufnahmen 18 von einem Bauteil 2 belegt sind. Dadurch kann erzielt werden, dass die Funktionstüchtigkeit der Lichtquelle jederzeit überprüfbar ist. Wäre das Kontrolllicht nicht vorhanden, könnte man nicht unterscheiden, ob alle Bauteilaufnahmen 18 von einem Bauteil 2 belegt sind oder ob die Lichtquelle funktionuntüchtig ist.

Alternativ zur vorgenannten Ausführungsform, bei der das Vorhandensein eines Bauteils 2 auf einer Bauteilaufnahme 18 durch die Detektion eines ersichtlichen oder nichtersichtlichen Leuchtpunkts 21 im Bild einer Kamera festgestellt wird, kann die Anwesenheit eines Bauteils 2 auch mittels einer speicherprogrammierbaren Steuerung (SPS) mit herkömmlichen Sensoren detektiert werden. Die herkömmlichen Sensoren sind beispielsweise Lichtschranken, kapazitive oder induktive Sensoren. Auch eine rein mechanische Detektion von Bauteilen 2 auf den Bauteilaufnahmen 18 ist möglich.

In allen vorgenannten Ausführungsformen ist die Vorrichtung dazu ausgebildet, nur eine Art von Bauteil 2 aus dem Behälter 3 aufzunehmen und auf den Bauteilträger 17 zu legen. D.h. alle Bauteile 2 weisen die gleichen Maße auf und sind im Wesentlichen gleich gefertigt, wodurch auch alle Bauteilaufnahmen 18 gleich gefertigt sind. In anderen Ausführungsformen könnten jedoch auch mehrere Behälter 3 in die Vorrichtung 11 eingeführt werden, in denen jeweils unterschiedliche Bauteile 2 mit unterschiedlichen Maßen zugeführt werden, z.B. befinden sich im ersten Behälter 3 Bauteile 2 mit ersten Maßen und im zweiten Behälter 3 befinden sich Bauteile 2 mit zweiten Maßen. Es ist ersichtlich, dass es erforderlich sein kann, Bauteilaufnahmen 18 an die unterschiedlichen Bauteile 2 anzupassen, sofern die Bauteilaufnahmen 18 nicht als Universalbauteilaufnahmen für Bauteile 2 unterschiedlicher Maße ausgebildet sind. Beispielsweise kann die Vorrichtung 11 zumindest einen ersten Bauteilträger 17 umfassen, der erste Bauteilaufnahmen 18 umfasst, auf welche Bauteile 2 mit ersten Maßen auflegbar sind, und zumindest einen zweiten Bauteilträger 17 umfassen, der zweite Bauteilaufnahmen 18 umfasst, auf welche Bauteile 2 mit zweiten Maßen auflegbar sind. Alternativ oder zusätzlich könnte ein Bauteilträger 17 eingesetzt werden, der sowohl zumindest eine erste Bauteilaufnahme 18 umfasst, auf welche Bauteile 2 mit ersten Maßen auflegbar sind, als auch zumindest eine zweite Bauteilaufnahme 18, auf welche Bauteile 2 mit zweiten Maßen auflegbar sind.

Der Greifroboter 15 kann nun dazu ausgebildet sein, Bauteile 2 mit ersten Maßen aus dem ersten Behälter 3 aufzunehmen und auf eine erste Bauteilaufnahme 18 zu legen, die zur Aufnahme von entsprechenden Bauteilen 2 ausgebildet ist, und Bauteile 2 mit zweiten Maßen aus dem zweiten Behälter 3 aufzunehmen und auf eine zweite Bauteilaufnahme 18 zu legen, die zur Aufnahme von entsprechenden Bauteilen 2 ausgebildet ist.

## Patentansprüche

1. Transfervorrichtung (12) zur Übergabe von Bauteilen (2) von einer Zuführseite (6) an eine sicherheitskritische Produktionsseite (7), an der sich ein Produktionsroboter (9) befindet,
wobei die Transfervorrichtung (12) dazu ausgebildet ist, zumindest einen Bauteil (2) aufzunehmen und zur Produktionsseite (7) zu überführen,
**dadurch gekennzeichnet, dass**
die Transfervorrichtung (12) zumindest einen verschwenkbaren Bauteilträger (17), bevorzugt zumindest zwei verschwenkbare Bauteilträger (17), umfasst, der zumindest eine Bauteilaufnahme (18), bevorzugt zumindest zwei Bauteilaufnahmen (18), zur Aufnahme eines Bauteils (2) umfasst,
wobei der zumindest eine Bauteilträger (17) um eine Achse (A) schwenkbar ist und von einer Beladestellung, in welcher Bauteile (2) von einer der Produktionsseite (7) abgewandten Seite auf die zumindest eine Bauteilaufnahme (18) legbar sind, in eine Entladestellung verschwenkbar ist, in welcher die Bauteile (2) von der Produktionsseite (7) entnehmbar sind.

2. Transfervorrichtung (12) nach Anspruch 1, wobei der bzw. die Bauteilträger (17) jeweils um eine horizontale Achse (A) verschwenkbar ist bzw. sind.

3. Transfervorrichtung (12) nach Anspruch 1, wobei der bzw. die Bauteilträger (17) jeweils um eine vertikale Achse (A) verschwenkbar ist bzw. sind.

4. Transfervorrichtung (12) nach einem der Ansprüche 1 bis 3, umfassend zumindest zwei Bauteilträger (17), wobei die Achsen (A) in einer gemeinsamen vertikalen Ebene oder in einer gemeinsamen Ebene liegen, die gegenüber einer vertikalen Ebene geneigt ist.

5. Transfervorrichtung (12) nach einem der Ansprüche 1 bis 4, wobei die Achse (A) des Bauteilträgers (17) durch die Schwerachse des Bauteilträgers (17) verläuft.

6. Transfervorrichtung (12) nach einem der Ansprüche 1 bis 5, wobei der Bauteilträger (17) ein längliches, bevorzugt L-förmiges, Profile ist, auf welchem zumindest zwei Bauteilaufnahmen (18) linear angeordnet sind.

7. Transfervorrichtung (12) nach einem der Ansprüche 1 bis 6, wobei der Bauteilträger (17) eine erste Trägerwand (19) und eine zweite Trägerwand (20) aufweist und die zumindest eine Bauteilaufnahme (18) in einem Zwickel zwischen der ersten Trägerwand (19) und der zweiten Trägerwand (20) angeordnet ist, wobei die erste Trägerwand (19) den Zugang seitens der Produktionsseite (7) auf den Bauteilträger (17) in der Beladestellung verhindert und die zweite Trägerwand (20) den Zugang auf den Bauteilträger (17) in der Entladestellung verhindert.

8. Transfervorrichtung (12) nach einem der Ansprüche 1 bis 7, umfassend zumindest zwei Bauteilträger (17), wobei die Bauteilträger (17) derart positioniert sind, dass ein Spalt von maximal 0,5 cm, bevorzugt maximal 0,3 cm, zwischen den Bauteilträgern (17) vorliegt, unabhängig davon, ob sich diese in der Beladestellung oder der Entladestellung befinden.

9. Transfervorrichtung (12) nach einem der Ansprüche 1 bis 8, wobei der Bauteilträger (17) aus Metall, bevorzugt Stahl, gefertigt ist und eine Dicke von mindestens 0,5 mm aufweist.

10. Transfervorrichtung (12) nach einem der Ansprüche 1 bis 9, wobei der Bauteilträger (17) zumindest eine weitere Bauteilaufnahme (18b) aufweist, wobei Bauteile (2) in der Entladestellung des Bauteilträgers (17) von der der Produktionsseite (7) abgewandten Seite auf die zumindest eine weitere Bauteilaufnahme (18b) legbar sind und Bauteile (2) in der Beladestellung des Bauteilträgers (17) von der Produktionsseite (7) von der zumindest einen weiteren Bauteilaufnahme (18b) entnehmbar sind.

11. Transfervorrichtung (12) nach einem der Ansprüche 1 bis 10, umfassend eine Steuereinrichtung, die dazu ausgebildet ist, einen leeren Bauteilträger (17) von der Entladestellung in die Beladestellung zu schwenken und einen vollen Bauteilträger (17) von der Beladestellung in die Entladestellung zu schwenken.

12. Transfervorrichtung (12) nach einem der Ansprüche 1 bis 11, umfassend eine Auswerteeinheit, eine mit der Auswerteeinheit verbundene Kamera und einen Leuchtpunkt (21) unter jeder der Bauteilaufnahmen (18) aller Bauteilträger (17), wobei ein jeweiliger Leuchtpunkt (21) von der Kamera erkennbar ist, wenn die jeweilige Bauteilaufnahme (18) unbelegt ist und von der Kamera unerkennbar ist, wenn sich ein Bauteil (2) auf der jeweiligen Bauteilaufnahme (18) befindet,
wobei die Auswerteeinheit dazu ausgebildet ist, eine Bauteilaufnahme (18) als belegt oder verdeckt zu erkennen, wenn ein jeweiliger Leuchtpunkt (21) im von der Kamera aufgenommenen Bild ersichtlich ist oder nicht.

13. Transfervorrichtung (12) nach Anspruch 12, wobei alle Leuchtpunkte (21) eines Bauteilträgers (17) durch eine einzige Lichtquelle, bevorzugt eine LED-Leiste (22), beleuchtet werden und jeweils durch Öffnungen im Bereich der Bauteilaufnahmen (18) ausgebildet sind, wobei jeder Bauteilträger (17) weiters bevorzugt eine weitere Öffnung (23) umfasst, durch welche die Lichtquelle ersichtlich ist, selbst wenn alle Bauteilaufnahmen (18) von Bauteilen (2) belegt sind.

14. Vorrichtung (11) zur Aufnahme eines Bauteils (2) aus einem Behälter (3) und Übergabe des Bauteils (2) an eine Produktionsseite (7), umfassend eine Transfervorrichtung (12) nach einem der Ansprüche 1 bis 13 und einen Greifroboter (15), wobei der Greifroboter (15) dazu ausgebildet ist, einen Bauteil (2) aus einem Behälter (3) aufzunehmen und den aus dem Behälter (3) aufgenommenen Bauteil (2) auf die Transfervorrichtung (12) zu legen, wobei die Vorrichtung (11) bevorzugt ein den Greifroboter (15) umschließendes Gehäuse (13) umfasst, wobei die Bauteilträger (17) eine Seitenwand der Vorrichtung (11) bilden, und wobei der Behälter (3) über eine Einschuböffnung in die Vorrichtung (11) einbringbar ist.

15. System umfassend eine Vorrichtung (11) nach Anspruch 14 und einen auf der Produktionsseite (7) befindlichen Produktionsroboter (9), welcher dazu ausgebildet ist, Bauteile (2) von Bauteilträgern (17) aufzunehmen, welche sich in der Entladestellung befinden.
